(19) Europäisches Patentamt
European Patent Office
Office européen des brevets

(11) **EP 3 225 735 A1**

(12) **EUROPEAN PATENT APPLICATION**
published in accordance with Art. 153(4) EPC

(43) Date of publication:
04.10.2017 Bulletin 2017/40

(51) Int Cl.:
*D21H 13/50* (2006.01)     *B29B 11/16* (2006.01)
*B29C 43/18* (2006.01)     *B29C 43/52* (2006.01)
*C08J 5/04* (2006.01)     *D04H 1/4242* (2012.01)
*B29K 101/12* (2006.01)     *B29K 105/08* (2006.01)

(21) Application number: 15863025.1

(22) Date of filing: 25.11.2015

(86) International application number:
PCT/JP2015/083000

(87) International publication number:
WO 2016/084824 (02.06.2016 Gazette 2016/22)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: 26.11.2014 JP 2014238880

(71) Applicant: **Toray Industries, Inc.**
**Tokyo 103-8666 (JP)**

(72) Inventors:
• **MURAMATSU, Hidetaka**
**Nagoya-shi**
**Aichi 455-8502 (JP)**
• **HIRANO, Noriyuki**
**Iyo-gun**
**Ehime 791-3193 (JP)**
• **HASHIMOTO, Takafumi**
**Nagoya-shi**
**Aichi 455-8502 (JP)**

(74) Representative: **Hoefer & Partner Patentanwälte
mbB**
**Pilgersheimer Straße 20**
**81543 München (DE)**

(54) **CARBON FIBER MAT, PREFORM, SHEET MATERIAL, AND MOLDED ARTICLE**

(57)     An object is to provide a carbon fiber mat which exhibits excellent mechanical properties when produced into a molded article and which has high shapability allowing drawing or the like.

    A carbon fiber mat wherein the discontinuous carbon fibers are dispersed in the form of monofilaments, orientation direction of the monofilaments of the discontinuous carbon fibers is random, number average fiber length ($L_n$) is at least 1.5 mm and up to 15 mm, and proportion in number (Pa) of the discontinuous carbon fiber monofilaments having a fiber length in the range of median fiber length ($L_c$) $\pm$ 20% is at least 40% and up to 99%.

FIG. 2

EP 3 225 735 A1

**Description**

Technical Field

The present invention relates to a carbon fiber mat which can be produced into a molded article having excellent mechanical properties as well as excellent shapability. More specifically, the present invention relates to a carbon fiber mat wherein discontinuous carbon fibers are dispersed in the form of monofilaments, the discontinuous carbon fiber are randomly oriented, the carbon fiber has a number average fiber length ($L_n$) of at least 1.5 mm and up to 15 mm with particular fiber length distribution.

Background Art

With the increase in the use of CFRP in various industrial fields, active research on the application of thermoplastic resins which can be molded in short molding and processing cycle with high productivity for the matrix is conducted. However, sheet materials prepared by using continuous fibers suffer from difficulty of molding complicated shapes and limitation in the products that can be molded therefrom despite their high mechanical properties. In the meanwhile, the materials used for injection molding had insufficient in mechanical properties and their use for the application of structural member has been difficult despite their ability of producing molded articles of complicated shapes in short time. In view of the situation as described above, there is a demand for the development of a thermoplastic CFRP which exhibits high mechanical properties and which can be used in molding articles having complicated shapes.

Patent Document 1 discloses a production method of a molded article comprising a carbon fiber and a thermoplastic resin wherein the molded article is formed from a random mat which is produced by partly opening chopped strands of the carbon fiber, the random mat comprising a mixture of carbon fiber bundles and carbon fiber monofilaments.

This technology has enabled production of molded articles which exhibits high mechanical properties simultaneously with capability of producing complicated shapes by the movability of the materials during the press molding. This technology, however, suffered from the problems of considerable change in the mechanical properties along the movement of the material, substantial loss of the properties in some parts of the molded article, and warping and twisting of the molded article. Accordingly, problems of the conventional press molding are not yet solved.

Patent Document 2 discloses a prepreg comprising a carbon fiber mat and a resin wherein the carbon fiber mat comprise a dispersion of randomly oriented carbon monofilaments. The carbon fiber constituting the carbon fiber mat has a wide fiber length distribution.

This technology was free from the serious problems as described above caused by the movement of the material, and molded articles having certain extent of complicatedness in shape such as those produced by drawing while exhibiting high mechanical properties could be produced. However, mechanical properties were not sufficient depending on the type of the complicated shape.

Prior Art Documents

Patent Documents

Patent Document 1: Japanese Unexamined Patent Publication (Kokai) No. 2013-49150
Patent Document 2: Japanese Unexamined Patent Publication (Kokai) No. 2010-235779

Summary of the Invention

Problems to Be Solved by the Invention

An object of the present invention is to provide a carbon fiber mat, a preform, and a sheet material for producing a molded article having a complicated shape exhibiting excellent mechanical properties.

Means for Solving the Problems

In order to solve the problems as described above, the inventors of the present invention made an intensive study and found the carbon fiber mat, the preform, and the sheet material having the constitution as described below. The present invention has been completed on the bases of such findings. Accordingly, the present invention has the following constitution.

(1) A carbon fiber mat wherein the discontinuous carbon fibers are dispersed in the form of monofilaments, orientation direction of the monofilaments of the discontinuous carbon fibers is random, number average fiber length ($L_n$) is at least 1.5 mm and up to 15 mm, and proportion in number (Pa) of the discontinuous carbon fiber monofilaments having a fiber length in the range of median fiber length ($L_c$) $\pm$ 20% is at least 40% and up to 99%.

(2) A carbon fiber mat according to (1) wherein the discontinuous carbon fiber monofilaments have a coefficient of variation (CV) of the fiber length of at least 0.1% and up to 55%.

(3) A carbon fiber mat according to any one of (1) to (2) wherein the discontinuous carbon fiber monofilament has a number average fiber length ($L_n$) of at least 2.5mm and up to 10 mm.

(4) A carbon fiber mat according to any one of (1) to (3) wherein proportion in number (Pb) of the discontinuous carbon fiber monofilaments having a fiber length in the range of median fiber length ($L_c$) of the discontinuous carbon fiber monofilaments $\pm$ 1 mm is at least 50% and up to 99%.

(5) A carbon fiber mat according to any one of (1) to (4) wherein the weight per unit area is at least 10 g/m$^2$ and up to 50 g/m$^2$.

(6) A preform containing the carbon fiber mat according to any one of (1) to (5) and a thermoplastic resin.

(7) A sheet material produced by applying heat and pressure to the preform according to (6).

(8) A molded article produced by applying heat and pressure to the preform according to (6) or the sheet material according to (7).

Advantageous Effect of the Invention

The carbon fiber mat of the present invention allows production of a molded article having excellent isotropic mechanical properties without severe restriction in the lamination angle in the lamination of the prepreg. In addition, various shaping including drawing is possible, and the resulting articles having complicated shapes exhibit excellent mechanical properties.

In view of such situation, the sheet material produced is well adapted for use in parts and members of automobiles, electric and electronic parts, home appliance, aircrafts, travel bags, and daily commodities.

Brief Description of the Drawings

[FIG. 1] FIG. 1 is a schematic view showing an embodiment of the molded article of the present invention.
[FIG. 2] FIG. 2 shows schematic views of an embodiment of the dispersion of the discontinuous carbon fiber constituting the carbon fiber mat used in the present invention.
[FIG. 3] FIG. 3 is a perspective view of a mold for press molding used in Examples and Comparative Examples.
[FIG. 4] FIG. 4 is a rough view of the lower mold (core side mold) of the mold for press molding used in Examples and Comparative Examples.
[FIG. 5] FIG. 5 is a rough view of the upper mold (cavity side mold) of the mold for press molding used in Examples and Comparative Examples.

Description of Preferred Embodiments

The carbon fiber mat of the present invention is a carbon fiber mat wherein the discontinuous carbon fibers are dispersed in the form of monofilaments, orientation direction of the monofilaments of the discontinuous carbon fibers is random, number average fiber length ($L_n$) is at least 1.5 mm and up to 15 mm, and proportion in number (Pa) of the discontinuous carbon fiber monofilaments having a fiber length in the range of median fiber length ($L_c$) $\pm$ 20% is at least 40% and up to 99%.

Next, constituents of the carbon fiber mat of the present invention are described.

The carbon fiber mat of the present invention has the morphology wherein monofilaments of the discontinuous carbon fiber are distributed in plane form, and exemplary mats include paper-making mat, carded mat, and air laid mat. The discontinuous carbon fiber as used herein is a carbon fiber having a number average fiber length ($L_n$) in the range of at least 1.5 mm and up to 15 mm. By using the discontinuous carbon fiber having such morphology for the carbon fiber mat, the fiber mat will have improved shapability into various shapes and shaping of complicated shape will be facilitated.

Examples of the preferable carbon fiber used for the discontinuous carbon fiber constituting the carbon fiber mat of the present invention include polyacrylonitrile (PAN), rayon, lignin, and pitch carbon fibers and graphite fibers. Of these, the more preferred is use of a PAN carbon fiber. These carbon fibers may also be a surface treated carbon fiber. Exemplary surface treatments include treatment with a sizing agent, treatment with a binder, and attachment of an additive.

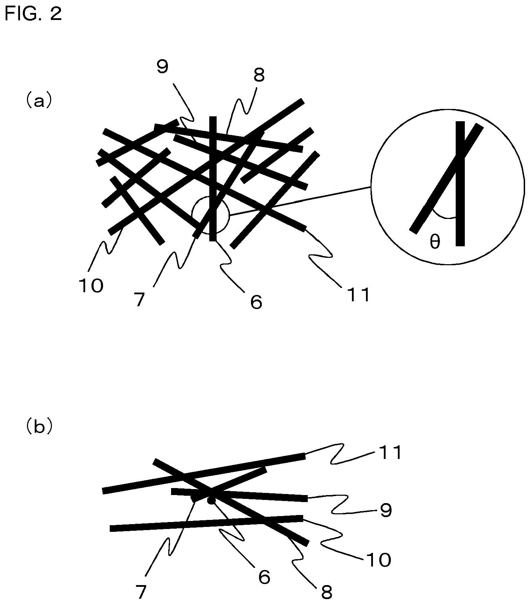

In the present invention, it is important that the discontinuous carbon fiber constituting the carbon fiber mat of the present invention is in the form of dispersion of monofilaments. The "dispersion of monofilaments" in this context means that the discontinuous carbon fiber is not in the form of a bundle where the monofilaments are arranged in parallel with each other but in the form wherein the monofilaments are separate from each other. More specifically, FIG. 2 shows embodiments of the dispersion of monofilaments of the discontinuous carbon fiber. The degree of dispersion which is an index for the dispersion of the discontinuous carbon fiber monofilaments is preferably at least 90%. When the degree of dispersion is less than 90%, the discontinuous carbon fiber in the form of a bundle may be left and this may cause loss of carbon fiber mat strength. In addition, a molded article containing a carbon fiber mat having a degree of dispersion of less than 90% may result in the reduced interface area between the discontinuous carbon fiber and the matrix resin, or insufficient impregnation of the matrix resin and generation of voids that may invite loss of mechanical properties. In view of the situation as described above, the discontinuous carbon fiber is preferably dispersed so that the degree of dispersion is at least 96%.

The degree of dispersion of the monofilaments of the discontinuous carbon fiber is proportion in number of the discontinuous carbon fiber monofilaments whose two-dimensional contact angle is at least 1° when the two-dimensional contact angle of the discontinuous carbon fiber monofilament with other discontinuous carbon fiber monofilaments in contact with this discontinuous carbon fiber monofilament is measured on the acute angle side of 0° to 90°. The degree of dispersion of the monofilaments of the discontinuous carbon fiber is represented by the following equation:

$$P = n/N \times 100 \ (\text{unit:} \quad \%)$$

- P: degree of dispersion
- n: total number of the discontinuous carbon fiber monofilaments having a contact angle of at least 1°
- N: total number of the discontinuous carbon fiber monofilaments whose contact angle was measured

When one monofilament of a discontinuous carbon fiber is in contact with a plurality of discontinuous carbon fibers, n (total number of the discontinuous carbon fiber monofilaments having a contact angle of at least 1°) is added together, and total of N (total number of the discontinuous carbon fiber monofilaments) which is at least 400 is used.

The two-dimensional contact angle is the angle between one discontinuous carbon fiber monofilament and another discontinuous carbon fiber monofilament in contact with such discontinuous carbon fiber monofilament in the projection plane parallel to the carbon fiber mat, and of the angles formed by the contacting monofilaments, the two-dimensional contact angle is the angle on acute side of at least 0° and up to 90°.

The two-dimensional contact angle is described in further detail by referring to the drawings. FIGS. 2(a) and (b) are schematic views (which schematically show only monofilaments of the discontinuous carbon fibers) showing an embodiment of the dispersion of the monofilaments of the discontinuous carbon fiber constituting the carbon fiber mat used in the present invention, and the schematic views are the one observed from the surface direction of the carbon fiber mat (FIG. 2(a)) and the one observed from the thickness direction (FIG. 2(b)). In FIGS. 2 (a) and (b), 6, 7, 8, 9, 10, and 11 are respectively discontinuous carbon fiber monofilaments.

For example, when the two-dimensional contact angle between the discontinuous carbon fiber monofilament 6 (hereinafter simply referred to as monofilament 6, and this applies to other monofilaments) in FIGS. 2(a) and 2(b) and the monofilament in contact with this monofilament 6 is measured, the monofilament 6 looks as if it crosses monofilaments 7 to 11 in FIG. 2(a) while FIG. 2(b) reveals that the monofilament 6 is not in contact with monofilaments 10 and 11. Accordingly, the two-dimensional contact angles to be evaluated are those between the reference monofilament 6 and monofilaments 7 to 9, and the angle between the monofilament 6 and the monofilament 7, the angle between the monofilament 6 and the monofilament 8, and the angle between the monofilament 6 and the monofilament 9 are the angles to be measured. For the two-dimensional contact angle between the monofilament 6 and the monofilament 7, the angle measured is the angle θ on the acute angle side of at least 0° and up to 90° of the 2 angles formed by the monofilaments 6 and 7. In this case, counting for the monofilament 6 is such that N = 3 (contacting with the monofilaments 7 to 9), and n is the number of the case wherein the angle θ between the monofilament 6 and the monofilaments 7 to 9 is at least 1° (1, 2, or 3). By the way, it is often difficult to optically confirm the contacting of the individual discontinuous carbon fiber monofilament from cross-sectional direction corresponding to FIG. 2(b) in practical point of view because of the difficulty of the sample preparation. Accordingly, in optically determining the n and the N for use in the calculation of the degree of dispersion, it is acceptable to solely use the image taken in the plane direction of the carbon fiber mat corresponding to FIG. 2(a), and conduct similar evaluation for monofilaments 7 to 11 crossing the monofilament 6 in such image (in the projected plane of the carbon fiber mat) to thereby obtain an approximate value which is used for the degree of dispersion.

The part used for the measurement of the two-dimensional contact angle of the monofilaments of the discontinuous carbon fiber constituting the carbon fiber mat, the preform, or the sheet material is not particularly limited. However, measurement near the edge of the carbon fiber mat is preferably avoided, and the measurement near the center having consistent thickness is preferable.

More specifically, the method used for measuring the two-dimensional contact angle of the discontinuous carbon fiber monofilaments constituting the carbon fiber mat or the sheet material is not limited, and an exemplary method is observation of the contact angle of the discontinuous carbon fiber monofilaments on the surface of the carbon fiber mat or sheet material. In this case, the discontinuous carbon fiber monofilaments are preferably exposed by grinding the surface to facilitate the observation of the discontinuous carbon fiber monofilament. Alternatively, the carbon fiber mat or sheet material may be sliced into thin slices to observe the contact angle of the discontinuous carbon fiber monofilaments by using light transmission. Furthermore, the carbon fiber mat or the sheet material may be observed by X-ray CT transmission to take an image of the orientation of the discontinuous carbon fiber monofilaments. In the case of a carbon fiber having a high X-ray permeability, a tracer fiber may be mixed with the discontinuous carbon fiber monofilaments, or a tracer agent may be coated on the discontinuous carbon fiber monofilaments to facilitate the observation.

In the present invention, it is important that the orientation of the discontinuous carbon fiber monofilaments constituting the carbon fiber mat is random in view of the isotropy of the mechanical properties. The "random orientation of the discontinuous carbon fiber monofilaments" as used herein means that the orientation of the discontinuous carbon fiber monofilaments has no regularity. An index for the orientation state of the discontinuous carbon fiber is frequency distribution of the two-dimensional orientation angle as will be described below. Although the details are described later, the frequency distribution of the two-dimensional orientation angle is determined by dividing the angle in the range of at least 0° and less than 180° in 6, and counting the number of monofilaments whose orientation angle falls within each angle range for use as the relative frequency. In the case of completely random orientation, the relative frequency of each divided angle range will be 0.17 (= 1/6). With regard to the relative frequency, the maximum value is preferably less than 0.25 and the minimum value is preferably at least 0.09. When the maximum value of the relative frequency is at least 0.25 or the minimum value of the relative frequency is less than 0.09, winding of the carbon fiber mat may become difficult, and hence, production efficiency may become insufficient. In addition, the preform or the sheet material containing such carbon fiber mat may suffer from insufficient moldability and evenness in the mechanical properties of the molded article may be impaired.

The maximum value and the minimum value of the relative frequency in the distribution of the two-dimensional orientation angle of the discontinuous carbon fiber monofilaments constituting the carbon fiber mat of the present invention can be determined by the method as described below. When the number of the randomly selected discontinuous carbon fiber monofilaments is at least 400, the maximum value and the minimum value of the respective relative frequency in the frequency distribution of the two-dimensional orientation angle of the discontinuous carbon fiber monofilaments constituting the carbon fiber mat of the present invention will be constant. The part used for measuring the maximum value and the minimum value of the 30°-interval relative frequency in the frequency distribution of the two-dimensional orientation angle of the discontinuous carbon fiber is not particularly limited. The measurement, however, is preferably conducted at the center where the thickness is consistent and measurement near the edge of the sheet material is avoided. If all of the 30°-interval relative frequency in the frequency distribution of the two-dimensional orientation angle of the discontinuous carbon fiber monofilaments is 0.17, it then means that the orientation of the discontinuous carbon fiber mono filaments constituting the carbon fiber mat is fully random. The two-dimensional orientation angle $\alpha_i$ is an angle in counter clockwise in the range of at least 0° and less than 180° in relation to arbitrarily set one reference straight line. The 30° interval relative frequency of orientation angle $\alpha_i$ was determined by the following equation:

$$\text{Maximum of the relative frequency} = N_{MAX}/400$$

$$\text{Minimum of the relative frequency} = N_{MIN}/400$$

- $\alpha_i$: the orientation angle measured (i = 1, 2, ... 400)
- N30: number of the discontinuous carbon fiber monofilaments whose orientation angle $\alpha_i$ is at least 0° and less than 30°
- N60: number of the discontinuous carbon fiber monofilaments whose orientation angle $\alpha_i$ is at least 30° and less than 60°
- N90: number of the discontinuous carbon fiber monofilaments whose orientation angle $\alpha_i$ is at least 60° and less than 90°
- N120: number of the discontinuous carbon fiber mono filaments whose orientation angle $\alpha_i$ is at least 90° and less than 120°
- N150: number of the discontinuous carbon fiber mono filaments whose orientation angle $\alpha_i$ is at least 120° and less than 150°
- N180: number of the discontinuous carbon fiber mono filaments whose orientation angle $\alpha_i$ is at least 150° and less than 180°
- $N_{MAX}$: maximum of the N30 to N180
- $N_{MIN}$: minimum of the N30 to N180

More specifically, the method used for measuring the two-dimensional orientation angle of the discontinuous carbon fiber monofilaments constituting the carbon fiber mat, the preform, or the sheet material is not limited, and an exemplary method is observation of the orientation of the discontinuous carbon fiber monofilaments on the surface of the carbon fiber mat or sheet material. In this case, the discontinuous carbon fiber monofilaments are preferably exposed by grinding the surface to facilitate the observation of the discontinuous carbon fiber monofilament. Alternatively, the carbon fiber mat or sheet material may be sliced into thin slices to observe the orientation of the discontinuous carbon fiber monofilaments by using light transmission. Furthermore, the carbon fiber mat or the sheet material may be observed by X-ray CT transmission to take an image of the orientation of the discontinuous carbon fiber monofilaments. In the case of a carbon fiber having a high X-ray permeability, a tracer fiber may be mixed with the discontinuous carbon fiber monofilaments, or a tracer agent may be coated on the discontinuous carbon fiber monofilaments to facilitate the observation.

It is important that the number average fiber length ($L_n$) of the discontinuous carbon fiber monofilaments constituting the carbon fiber mat of the present invention is at least 1.5 mm and up to 15 mm. When the number average fiber length ($L_n$) is less than 1.5 mm, the reinforcement effect by the carbon fiber will be insufficient, and use of such carbon fiber mat may result in the poor mechanical properties of the molded article. In the meanwhile, when the number average fiber length ($L_n$) is in excess of 15 mm, expansion in the thickness direction will be high in the course of laminating the preforms obtained by combining the carbon fiber mat with the thermoplastic resin or molding such preform or sheet material prepared by applying heat and pressure to the preform, and this may result in the loss of handling convenience. In addition, when the number average fiber length ($L_n$) is in excess of 15 mm, the degree of dispersion of the discontinuous carbon fiber monofilaments will be low and the discontinuous carbon fiber will be in the form of bundles, and use of such carbon fiber mat may result in the molded article including voids as well as increased bending and entangling of the fibers that may result in the loss of mechanical properties and impact strength of the molded article.

The number average fiber length ($L_n$) of the discontinuous carbon fiber monofilaments constituting the carbon fiber mat of the present invention is more preferably at least 2.5mm and up to 10 mm. When the number average fiber length ($L_n$) is at least 2.5mm, the effect of reinforcement by the carbon fiber will be high and use of such carbon fiber mat enables production of a molded article having higher mechanical properties. In the meanwhile, when the number average fiber length ($L_n$) is up to 10 mm, the expansion in the thickness direction will be low in the course of laminating the preforms obtained by combining the carbon fiber mat with the thermoplastic resin or molding such preform or sheet material prepared by applying heat and pressure to the preform, and this may result in the improvement of the handling convenience.

The coefficient of variation (CV) of the fiber length of the discontinuous carbon fiber monofilaments constituting the carbon fiber mat of the present invention is preferably at least 0.1% and up to 55%. The coefficient of variation (CV) of the fiber length is an index for variation of the fiber length of the discontinuous carbon fiber monofilaments constituting the carbon fiber mat, and this coefficient of variation (CV) is calculated by measuring the fiber length of a given number of carbon fiber monofilaments, dividing standard deviation ($\sigma$) of the thus obtained fiber length with number average fiber length ($L_n$). The coefficient of variation (CV) of the fiber length of at least 0.1% and up to 55% is preferable, since when the coefficient of variation (CV) of the fiber length is in such range, the preform prepared by combining the carbon fiber mat with the thermoplastic resin and the sheet material prepared by applying temperature and pressure to the preform will have excellent moldability, and their use enables production of a molded article having consistent mechanical properties.

The number average fiber length ($L_n$) and the coefficient of variation (CV) of the fiber length of the discontinuous carbon fiber monofilaments of the carbon fiber mat, the preform, or the sheet material of the present invention may be measured by the methods as described below. A part of the carbon fiber mat, the preform, or the sheet material is cut out, and after thoroughly dissolving the binder and the matrix in a solvent capable of dissolving the binder and the matrix, the discontinuous carbon fiber is separated by a known method such as filtration. When there is no solvent capable of dissolving the binder and the matrix, the part of the carbon fiber mat, the preform, or the sheet material that has been cut out is heated to a temperature of 500°C for 30 minutes, and the binder and the matrix are removed by baking to thereby separate the discontinuous carbon fiber monofilaments. 400 monofilaments are randomly selected from the separated discontinuous carbon fiber monofilaments, and their length is measured by an optical microscope to the unit of 1 $\mu$m for use as the fiber length $L_i$. The number average fiber length ($L_n$) of the discontinuous carbon fiber monofilaments,

standard deviation ($\sigma$) and the coefficient of variation (CV) of the fiber length are determined by the following equation:

$$L_n = \Sigma L_i / 400 \text{ (unit:  mm)}$$

$$\sigma = (1/400 \cdot \Sigma (L_i - L_n)^2)^{(1/2)} \text{ (unit:  mm)}$$

$$CV = \sigma / L_n \text{ x } 100 \text{ (unit:  \%)}$$

- $L_c$: the value located in the middle when all fiber lengths measured were placed in value order from the smallest ($L_1$, $L_2$, $L_3$, ... $L_{400}$) (unit: mm)
- $L_i$: the fiber length measured (i = 1, 2, 3, ... 400) (unit: mm)

In the carbon fiber mat of the present invention, it is important that proportion in number (Pa) of the discontinuous carbon fiber monofilaments having a fiber length in the range of median fiber length ($L_c$) of the discontinuous carbon fiber monofilaments $\pm$ 20% is at least 40% and up to 99%. When the Pa is less than 40%, there is a risk that the moldability in the molding of the preform prepared by combining the carbon fiber mat with the thermoplastic resin and the sheet material prepared by applying temperature and pressure to the preform and the mechanical properties of the resulting molded article may be poor. In the meanwhile, the Pa in excess of 99% can be attained only after cutting all carbon fibers in the same length in the step of cutting the carbon fiber, and various conditions are adjusted so that the carbon fiber is not broken in the step of forming the mat, and this may result in the poor production efficiency.

In the carbon fiber mat of the present invention, proportion in number (Pb) of the discontinuous carbon fiber monofilaments having a fiber length in the range of median fiber length ($L_c$) of the discontinuous carbon fiber monofilaments $\pm$ 1 mm is preferably at least 50% and up to 99%. The Pb of at least 50% is preferable since moldability in molding the preform prepared by combining the carbon fiber mat with the thermoplastic resin and the sheet material prepared by applying temperature and pressure to the preform will be improved, and the molded article prepared therefrom will exhibit improved mechanical properties. In the meanwhile, the Pb in excess of 99% can be attained only after cutting all carbon fibers in the same length in the step of cutting the carbon fiber, and various conditions are adjusted so that the carbon fiber is not broken in the step of forming the mat, and this may result in the poor production efficiency.

The proportion in number (Pa) of the carbon fiber having a fiber length in the range of median fiber length ($L_c$) of the discontinuous carbon fiber monofilaments $\pm$ 20% and the proportion in number (Pb) of the carbon fiber having a fiber length in the range of the median fiber length ($L_c$) $\pm$ 1 mm are calculated from fiber length $L_i$ of the discontinuous carbon fiber monofilaments measured in determining the number average fiber length ($L_n$) by the following equations:

$$Pa = Na/400 \text{ x } 100 \text{ (unit:  \%)}$$

$$Pb = Nb/400 \text{ x } 100 \text{ (unit:  \%)}$$

- $L_i$: the fiber length measured (i = 1, 2, 3, ... 400) (unit: mm)
- $L_c$: the value located in the middle when all fiber lengths measured were placed in value order from the smallest ($L_1$, $L_2$, $L_3$, ... $L_{400}$) (unit: mm)
- Na: number of discontinuous carbon fiber monofilaments whose fiber length $L_i$ is at least ($L_c$-0.2$L_c$) and less than ($L_c$+0.2$L_c$)
- Nb: number of discontinuous carbon fiber monofilaments whose fiber length $L_i$ is at least ($L_c$-1) and less than ($L_c$+1)

The preform of the present invention contains at least the carbon fiber mat of the present invention and a thermoplastic resin, and it is the state before being worked into the molded article. The laminate prepared by laminating the preform of the present invention is subjected to the step of molding either directly or after the intervening processing step for working into the molded article. The processing step is not particularly limited, and exemplary processing steps include the cutting step of cutting the molding material to the predetermined size or shape, the bonding step wherein the carbon fiber mat and the thermoplastic resin are bonded for improving handling convenience of the preform, and defoaming step wherein air is removed from the preform.

The laminate constitution when the preform of the present invention is produced into a laminate is not particularly limited, and any desired laminate constitution may be selected by taking mechanical properties, impact strength, shapability, design, or the like into consideration. For example, a molded article having the thermoplastic resin fully impregnated exhibiting excellent mechanical properties may be produced by using two or more sheets of carbon fiber thin layer mats and two or more sheets of thermoplastic resin thin layers, and forming a preform by alternately laminating these. A molded article having excellent surface appearance can be produced by molding a preform having the thermoplastic resin formed as its outermost layer. In view of the warpage of the resulting molded article, the laminate constitution is preferably symmetrical in thickness direction.

Examples of the thermoplastic resin constituting the preform and the sheet material of the present invention include polyolefin resins such as polyethylene (PE) resin and polypropylene (PP) resin, polyethylene terephthalate (PET) resin, polyamide (PA) resin, polyphenylene sulfide (PPS) resin, and their copolymerization resins, modified resins, and alloys. Of these, the preferred in view of the light weight of the resulting molded article is polypropylene resin; the preferred in view of the rigidity is polyamide resin; and the preferred in view of the heat resistance is polyphenylene sulfide resin.

The preform of the present invention may include a third sheet-shaped material in addition to the carbon fiber mat (first sheet-shaped material) and the thermoplastic resin (second sheet-shaped material) to the extent not adversely affecting its properties. The third sheet-shaped material is preferably a sheet-shaped material prepared by using a thermoplastic resin for the matrix resin in view of the adhesion properties, and exemplary materials include thermoplastic UD prepreg, compound sheet, and thermoplastic foaming resin sheet.

The sheet material of the present invention can be prepared by heating the preform of the present invention to melt the thermoplastic resin, applying a pressure, and impregnating the thermoplastic resin in the carbon fiber mat for integration. The method used for producing the sheet material is not particularly limited, and exemplary production methods include mold pressing, application of high temperature and high pressure in an autoclave, and also, methods using apparatus such as double belt press or calendar rolls in which the sheet material can be placed in the pressure-bonding zone in which the desired temperature and pressure can be applied. The sheet material can be produced by handling such continuous or semi-continuous process.

The preform or the sheet material of the present invention may be molded by applying heat and pressure to produce the molded article.

The method used for the molding of the molded article is not particularly limited, and an exemplary molding method is press molding. The type of the press molding may be adequately selected depending on the shape of the molded article. The "press molding" as used herein is the method wherein a molded article is produced from the laminate of a preform or a sheet by changing its shape by bending, shearing, compressing with a processing machinery, mold, tool, or other jigs and subsidiary materials for press molding. Exemplary press moldings in terms of morphology include drawing, deep drawing, flanging, corrugating, edge curling, and friction pressing. The press molding is preferably conducted by mold pressing using a metal mold in view of installation and amount of energy used in the molding, simplification of jigs and subsidiary materials used in the molding, and flexibility in the choice of pressure and temperature used in the molding.

Exemplary mold pressing include heat-and-cool method wherein the preform or the sheet material is preliminarily placed in the mold, and the pressure and the temperature are applied with clamping, and the preform or the sheet material is cooled by cooling the mold with the clamping retained to thereby produce the molded article; and stamping method wherein the preform or the sheet material preliminarily heated to a temperature not lower than the melting temperature of the matrix resin by a heater such as far-infrared heater, heating plate, high temperature oven, or induction heater, placing the thermoplastic resin in molten or softened state on the lower mold of the mold used for the molding, and closing the mold with clamping followed by cooling with the pressure applied.

In view of the moldability, the weight per unit area of the carbon fiber mat of the present invention is preferably at least 10 g/m$^2$ and up to 50 g/m$^2$. When the weight per unit area is at least 10 g/m$^2$, the carbon fiber mat will exhibit high strength with no problems such as tearing and the mat will have an improved handling convenience. When the weight per unit area is up to 50 g/m$^2$, the preform or the sheet material of the present invention will be a sufficiently thin layer capable of following the complicated mold shape having a rib, boss, deep drawn parts, and side walls, and the molded article will have excellent outer appearance. Furthermore, a preform or a sheet material prepared by laminating many carbon fiber mats which are respectively a thin layer of up to 50 g/m$^2$ has reduced wrinkles and twists, and hence, excellent mechanical properties and outer appearance since sliding occurs between the carbon fiber mat layer and its upper and lower carbon fiber mat layers in the course of the molding.

The molded article of the present invention may additionally contain a filler, electroconductivity-imparting agent, flame retardant, pigment, dye, lubricant, mold release agent, compatibilizing agent, dispersant, nucleating agent, plasticizer, thermal stabilizer, antioxidant, anti-coloring agent, UV absorbent, fluidity modifier, foaming agent, antimicrobial agent, vibration-damping agent, deodorant, slidability-modifying agent, antistatic agent, and the like deepening on the intended application.

Examples

<Materials used>

[Carbon fiber (CF)]

CF-1: carbon fiber

Spinning and baking of a polymer containing polyacrylonitrile as its main component was conducted to produce a continuous carbon fiber with the total filament number of 12000. The continuous carbon fiber was then subjected to electrolytic surface treatment and dried in a heated air at 120°C to obtain carbon fiber (CF-1). This carbon fiber (CF-1) had the properties as described below.
Density: 1.8 g /cm$^3$
Monofilament diameter: 7 $\mu$m
Tensile strength: 4.9 GPa
Tensile modulus: 230 GPa

[Binder (B-1)]

An aqueous dispersion of "POLYMENT" (Registered Trademark) SK-1000 manufactured by Nippon Shokubai Co., Ltd.) adjusted to a solid concentration of 1.6 wt% was used for the binder. The physical properties were as described below.
Structure: An acryl polymer having an aminoalkylene group in its side chain
Amine hydrogen equivalent weight: 650 g /eq
Softening temperature : 160°C
solid concentration : 1.6 wt%

[Carbon fiber mat 1 (CFM-1)]

The carbon fiber (CF-1) was cut to 6 mm by using a cartridge cutter to obtain chopped fibers for use as the discontinuous carbon fibers. 60 liters of a dispersion medium having a concentration of 0.1% by weight comprising water and a surfactant (polyoxyethylene lauryl ether (product name) manufactured by Nacalai Tesque, Inc.) was prepared and this dispersion medium was introduced in a laying apparatus. The laying apparatus was composed of a laying tank equipped with an agitator having rotating blades (volume, 50 liters) at the top, and a water storage tank (volume, 10 liters) at the bottom, and a porous support is provided between the laying tank and the water storage tank. First, chopped fiber whose weight had been adjusted to realize the desired weight per unit area was introduced in the dispersion medium. Next, the dispersion was agitated for 3 minutes by intermittent agitation with clockwise and counter-clockwise rotations of the agitator switched in every 10 seconds to prepare a slurry having the discontinuous carbon fibers dispersed therein. The slurry was then supplied from the water storage tank, dewatered through the porous support, and a carbon fiber mat comprising the discontinuous carbon fibers was prepared by applying the binder (B-1). The carbon fiber mat was dried in a hot air drier under the conditions of 150°C for 2 hours to produce carbon fiber mat 1 comprising the discontinuous carbon fibers having a weight per unit area of 100 g/m$^2$.

[Carbon fiber mat 2 (CFM-2)]

The procedure of preparing the carbon fiber mat 1 was repeated except that the clockwise and counter-clockwise rotations of the agitator were switched in every 5 seconds to intentionally increase the dispersion rate to obtain carbon fiber mat 2 comprising the discontinuous carbon fibers having a weight per unit area of 100 g/m$^2$.

[Carbon fiber mat 3 (CFM-3)]

The procedure of preparing the carbon fiber mat 1 comprising the discontinuous carbon fibers was repeated except that the clockwise and counter-clockwise rotations of the agitator were switched in every 5 seconds and the dispersion was agitated for 5 minutes to intentionally increase the dispersion rate to obtain carbon fiber mat 3 comprising the discontinuous carbon fibers having a weight per unit area of 100 g/m$^2$.

[Carbon fiber mat 4 (CFM-4)]

The procedure of preparing the carbon fiber mat 1 comprising the discontinuous carbon fibers was repeated except that the chopped fiber used was the one prepared by cutting the carbon fiber (CF-1) to 3 mm by using a cartridge cutter to obtain carbon fiber mat 4 comprising the discontinuous carbon fibers having a weight per unit area of 100 g/m$^2$.

[Carbon fiber mat 5 (CFM-5)]

The procedure of preparing the carbon fiber mat 1 comprising the discontinuous carbon fibers was repeated except that the chopped fiber used was the one prepared by cutting the carbon fiber (CF-1) to 10 mm by using a cartridge cutter to obtain carbon fiber mat 5 comprising the discontinuous carbon fibers having a weight per unit area of 100 g/m$^2$.

[Carbon fiber mat 6 (CFM-6)]

The procedure of preparing the carbon fiber mat 1 comprising the discontinuous carbon fibers was repeated except that the chopped fiber used was the one prepared by cutting the carbon fiber (CF-1) to 2 mm by using a cartridge cutter to obtain carbon fiber mat 6 comprising the discontinuous carbon fibers having a weight per unit area of 100 g/m$^2$.

[Carbon fiber mat 7 (CFM-7)]

The procedure of preparing the carbon fiber mat 1 comprising the discontinuous carbon fibers was repeated except that the chopped fiber used was the one prepared by cutting the carbon fiber (CF-1) to 20 mm by using a cartridge cutter to obtain carbon fiber mat 7 comprising the discontinuous carbon fibers having a weight per unit area of 100 g/m$^2$.

[Carbon fiber mat 8 (CFM-8)]

The procedure of preparing the carbon fiber mat 1 comprising the discontinuous carbon fibers was repeated except that the chopped fiber used was the one prepared by cutting the carbon fiber (CF-1) to 15 mm by using a cartridge cutter and the agitator was rotated for 15 minutes in the clockwise rotation without switching the rotation direction to intentionally reduce the proportion in number of the discontinuous carbon fibers having a length in the range of median fiber length ($L_c$) $\pm$ 20% to obtain carbon fiber mat 8 comprising the discontinuous carbon fibers having a weight per unit area of 100 g/m$^2$.

[Carbon fiber mat 9 (CFM-9)]

The procedure of preparing the carbon fiber mat 1 comprising the discontinuous carbon fibers was repeated except that the chopped fiber used was the one prepared by cutting the carbon fiber (CF-1) to 6 mm by using a cartridge cutter and the agitator was rotated for 15 minutes in the clockwise rotation without switching the rotation direction to intentionally reduce the proportion in number of the discontinuous carbon fibers in the range of median fiber length ($L_c$) $\pm$ 20% to obtain carbon fiber mat 9 comprising the discontinuous carbon fibers having a weight per unit area of 100 g/m$^2$.

[Carbon fiber mat 10 (CFM-10)]

The procedure of preparing the carbon fiber mat 1 comprising the discontinuous carbon fibers was repeated except that the chopped fiber used was the one prepared by cutting the carbon fiber (CF-1) to 50 mm by using a cartridge cutter and the agitator was rotated for 15 minutes in the clockwise rotation without switching the rotation direction to intentionally reduce the proportion in number of the discontinuous carbon fibers in the range of median fiber length ($L_c$) $\pm$ 20% to obtain carbon fiber mat 10 comprising the discontinuous carbon fibers having a weight per unit area of 100 g/m$^2$.

[Carbon fiber mat 11 (CFM-11)]

The procedure of preparing the carbon fiber mat 1 comprising the discontinuous carbon fibers was repeated except that the chopped fiber used was the one prepared by cutting the carbon fiber (CF-1) to 6 mm by using a cartridge cutter and the agitator was rotated for 30 seconds in the clockwise rotation without switching the rotation direction to intentionally reduce the degree of dispersion to obtain carbon fiber mat 11 comprising the discontinuous carbon fibers having a weight per unit area of 100 g/m$^2$.

[Carbon fiber mat 12 (CFM-12)]

The procedure of preparing the carbon fiber mat 1 comprising the discontinuous carbon fibers was repeated except that the weight per unit area of the carbon fiber mat was 33 g/m² to obtain carbon fiber mat 12 comprising the discontinuous carbon fibers having a weight per unit area of 33 g/m².

[Thermoplastic resin film 1 (TPF-1)]

A predetermined amount of polypropylene resin ("Prime Polypro" (Registered Trademark) J707G manufactured by Prime Polymer Co., Ltd.) was placed on a plate made of stainless steel, and another stainless steel plate was placed over the resin. A spacer having a desired thickness was placed between the plates. Press was retained at a temperature of 220°C and a pressure of 1 MPa for 5 minutes to produce a thermoplastic resin film 1 (TPF-1) having a weight per unit area of 120 g/m².

[Thermoplastic resin film 2 (TPF-2)]

A predetermined amount of polyamide resin ("Amilan" (Registered Trademark) CM1021T manufactured by TORAY) was placed on a plate made of stainless steel, and another stainless steel plate was placed over the resin. A spacer having a desired thickness was placed between the plates. Press was retained at a temperature of 250°C and a pressure of 1 MPa for 5 minutes to produce a thermoplastic resin film 2 (TPF-2) having a weight per unit area of 150 g/m².

[Carbon fiber-reinforced thermoplastic resin sheet 1(CFRP-1)]

A laminate of 3 sheets in total, namely, 1 sheet of carbon fiber mat 1 (CFM-1) and 2 sheets of the thermoplastic resin sheet 2 (TPF-2) were set on a stainless steel tool plate, and the laminate was pressed at a temperature of 220°C and a pressure of 5 MPa for 5 minutes to produce carbon fiber-reinforced thermoplastic resin sheet material 1 (CFRP-1). Thickness of the carbon fiber-reinforced thermoplastic resin sheet 1 (CFRP-1) in the form of a sheet was adjusted to 0.33 mm by using a spacer having a thickness of 0.33 mm.

[Carbon fiber-reinforced thermoplastic resin sheet 2(CFRP-2)]

A laminate of 5 sheets in total, namely, 3 sheets of carbon fiber mat 12 (CFM-12) and 2 sheets of the thermoplastic resin sheet 2 (TPF-2) were set on a stainless steel tool plate, and the laminate was pressed at a temperature of 220°C and a pressure of 5 MPa for 5 minutes to produce carbon fiber-reinforced thermoplastic resin sheet material 2 (CFRP-2). Thickness of the carbon fiber-reinforced thermoplastic resin sheet 2 (CFRP-2) in the form of a sheet was adjusted to 0.33 mm by using a spacer having a thickness of 0.33 mm.

<Mold>

(Mold 1) Mold for press molding

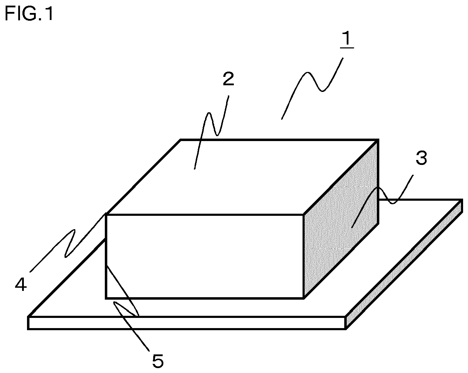

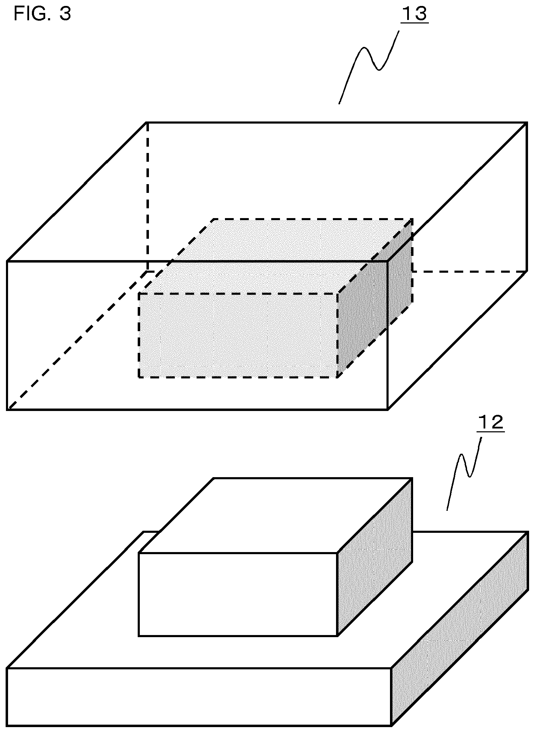

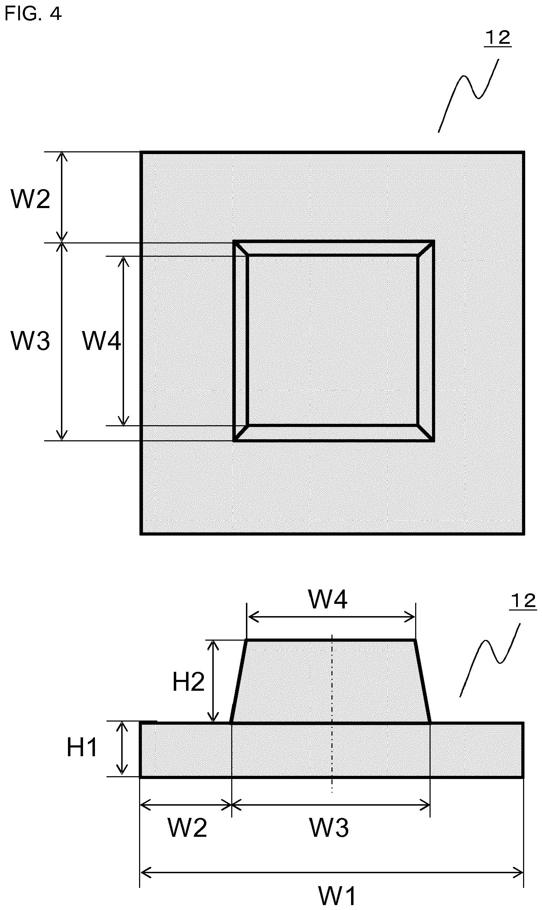

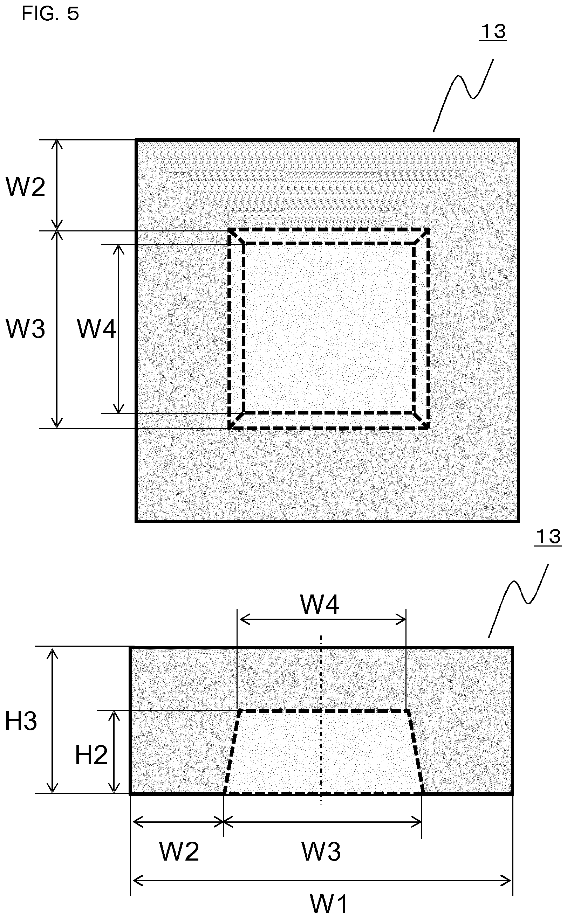

The mold used was a pair of mating molds (FIG. 3) for producing the box-shaped molded article of FIG. 1, and the molds had the sizes as described below. The lower mold (core side mold) and the upper mold (cavity side mold) respectively had the sizes as shown in FIGS. 4 and 5.

- FIG. 4 and FIG. 5: W1, 300 mm; W2, 50 mm; W3, 200 mm; W4, 195 mm; H1, 20 mm; H2, 50 mm; H3, 70 mm.

<Evaluation and measurement procedures>

The evaluation for the Examples were conducted as described below.

(1) Measurement of degree of dispersion of the discontinuous carbon fiber mono filaments

The carbon fiber mat, the preform, or the sheet material was observed by an optical microscope, and after randomly selecting one discontinuous carbon fiber monofilament, the two-dimensional contact angles of this discontinuous carbon fiber monofilament with other discontinuous carbon fiber monofilaments in contact with this discontinuous carbon fiber monofilament were measured. The two-dimensional contact angle was measured on the acute angle side of 0° to 90°, and the proportion in number of the discontinuous carbon fiber monofilaments with the two-dimensional contact angle of at least 1° was determined.

With regard to the test piece used for the measurement of the orientation angle distribution of the carbon fiber mat or the sheet material, use of the part near the edge was avoided, and the part near the center having a consistent thickness was used.

$$P = n/N \times 100 \text{ (unit: \%)}$$

- P: degree of dispersion
- n: total number of the discontinuous carbon fiber (monofilament) having a contact angle of at least 1°
- N: total number of the discontinuous carbon fiber (monofilament) whose contact angle was measured

When one monofilament of a discontinuous carbon fiber is in contact with a plurality of discontinuous carbon fibers, n (total number of the discontinuous carbon fiber monofilaments having a contact angle of at least 1°) is added together, and total of N (total number of the discontinuous carbon fiber monofilaments) which is at least 400 is used.

(2) Measurement of relative frequency of two-dimensional orientation angle distribution of the discontinuous carbon fiber monofilaments

The carbon fiber mat, the preform, or the sheet material was observed with an optical microscope, and 400 discontinuous carbon fiber monofilaments were randomly selected. Next, any one monofilament was selected for use as the reference straight line for measuring the angle, and all of the selected discontinuous carbon fiber monofilaments were measured for their angle of orientation direction (hereinafter abbreviated as orientation angle $\alpha_i$) in relation to the reference straight line. The orientation angle $\alpha_i$ measured was the angle in counter clockwise in relation to the reference straight line which was an angle of at least 0° and less than 180°. Relative frequency in the increment of 30° of this orientation angle $\alpha_i$ was determined by the following equation.

With regard to the test piece used for the measurement of the two-dimensional orientation angle of the discontinuous carbon fiber monofilaments constituting the carbon fiber mat or the sheet material, use of the part near the edge was avoided, and the part near the center having a consistent thickness was used. The part cut out of the carbon fiber mat or the sheet material as the test piece was embedded in the epoxy resin as desired, and the surface was ground until the discontinuous carbon fiber monofilaments are exposed to prepare the test piece for observation.

$$\text{Maximum of the relative frequency} = N_{MAX}/400$$

$$\text{Minimum of the relative frequency} = N_{MIN}/400$$

- $\alpha_i$: the orientation angle measured (i = 1, 2, ... 400)
- N30: number of the discontinuous carbon fiber monofilaments whose orientation angle $\alpha_i$ is at least 0° and less than 30°
- N60: number of the discontinuous carbon fiber monofilaments whose orientation angle $\alpha_i$ is at least 30° and less than 60°
- N90: number of the discontinuous carbon fiber monofilaments whose orientation angle $\alpha_i$ is at least 60° and less than 90°
- N120: number of the discontinuous carbon fiber monofilaments whose orientation angle $\alpha_i$ is at least 90° and less than 120°
- N150: number of the discontinuous carbon fiber mono filaments whose orientation angle $\alpha_i$ is at least 120° and less than 150°
- N180: number of the discontinuous carbon fiber monofilaments whose orientation angle $\alpha_i$ is at least 150° and less than 180°
- $N_{MAX}$: maximum of the N30 to N180
- $N_{MIN}$: minimum of the N30 to N180

(3) Measurement of number average fiber length ($L_n$) and coefficient of variation (CV) of the fiber length of the discontinuous carbon fiber monofilaments

A part of the carbon fiber mat, the preform, or the sheet material was cut out, and after thoroughly dissolving the binder and the matrix in a solvent capable of dissolving the binder and the matrix, the discontinuous carbon fiber was separated by a known method such as filtration. When there was no solvent capable of dissolving the binder and the matrix, the part of the sheet material that had been cut out was heated to a temperature of 500°C for 30 minutes, and the binder and the matrix were removed by baking to thereby separate the discontinuous carbon fiber. 400 monofilaments were randomly selected from the separated discontinuous carbon fiber monofilaments, and their length was measured by an optical microscope to the unit of 1 $\mu$m for use as the fiber length $L_i$. The number average fiber length ($L_n$) and the coefficient of variation (CV) of the fiber length of the discontinuous carbon fiber monofilaments were determined by the following equation:

$$L_n = \Sigma L_i / 400 \ (\text{unit:} \quad \text{mm})$$

$$\sigma = (1/400 \cdot \Sigma (L_i - L_n)^2)^{(1/2)} \ (\text{unit:} \quad \text{mm})$$

$$CV = \sigma / L_n \ x \ 100 \ (\text{unit:} \quad \%)$$

- $L_i$: length of the fiber measured (i = 1, 2, 3, ... 400) (unit: mm)

(4) Measurement of proportion in number (Pa) of the discontinuous carbon fiber monofilaments having a fiber length in the range of median fiber length ($L_c$) of the discontinuous carbon fiber monofilaments $\pm$ 20% and proportion in number (Pb) of the discontinuous carbon fiber monofilaments having a fiber length in the range of median fiber length ($L_c$) of the discontinuous carbon fiber monofilaments $\pm$ 1 mm

The proportion in number (Pa) of the discontinuous carbon fiber monofilaments having a fiber length in the range of median fiber length ($L_c$) of the discontinuous carbon fiber monofilaments $\pm$ 20% and the proportion in number (Pb) of the discontinuous carbon fiber monofilaments having a fiber length in the range of median fiber length ($L_c$) of the discontinuous carbon fiber monofilaments $\pm$ 1 mm were calculated from fiber length $L_i$ of the discontinuous carbon fiber monofilaments measured by the method as described above by the following equation:

$$Pa = Na / 400 \ x \ 100 \ (\text{unit:} \quad \%)$$

$$Pb = Nb / 400 \ x \ 100 \ (\text{unit:} \quad \%)$$

- $L_i$: the fiber length measured (i = 1, 2, 3, ... 400) (unit: mm)
- $L_c$: the value located in the middle when all fiber lengths measured were placed in value order from the smallest ($L_1$, $L_2$, $L_3$, ... $L_{400}$) (unit: mm)
- Na: number of discontinuous carbon fiber monofilaments whose fiber length $L_i$ is at least ($L_c$-0.2$L_c$) and less than ($L_c$+0.2$L_c$)
- Nb: number of discontinuous carbon fiber monofilaments whose fiber length $L_i$ is at least ($L_c$-1) and less than ($L_c$+1)

(5) Evaluation of flexural strength

Flexural strength of the molded articles produced in the Examples and Comparative Examples was evaluated according to the specification of ASTM D790 (revised in 2010).
Test pieces having a length of 50 $\pm$ 1 mm and a width of 25 $\pm$ 0.2 mm were cut out in two directions of 0° and 90° in relation to an arbitrary direction (0°) from the top face and side face of the molded article produced in the Example or the Comparative Example for use as the test pieces of the flexural test. The number of the measurement for each direction was n = 5, and the average of all measurements (n = 10) was used for the flexural strength.
The flexural modulus was measured by using "Instron" (Registered Tradename) universal testing machine Model 4201 (manufactured by Instron) for the testing machine with three point bending test jig (loading pin diameter 10 mm, support pin diameter 10 mm) with the support span set at 16 times the thickness of the test piece. The test was conducted by using a test piece having a moisture content of up to 0.1% by weight and in the surrounding atmosphere at a temperature of 23°C and humidity of 50% by weight.

(6) Evaluation of coefficient of variation of flexural strength

The coefficient of variation ($CV_b$) of the flexural strength was determined from the flexural strength ($\sigma_b$) and its standard deviation ($s_b$) by the following equation:

$$CV_b = s_b / \sigma_b \times 100 \text{ (unit: \%)}$$

(7) Evaluation of Izod impact strength (notched)

Izod impact strength (notched) of the molded articles was evaluated according to ASTM D256 (revised in 2010).
Test pieces having a length of 62 ± 1 mm, a width of 12.7 ± 0.15 mm, a notch angle of 22.5° ± 0.5°, and 0.25 ± 0.05R were cut out in two directions of 0° and 90° in relation to an arbitrary direction (0°) from the top face and side face of the molded article produced in the Example or the Comparative Example for use as the test pieces of the Izod impact strength test. The number of the measurement for each direction was n = 5, and the average of all measurements (n = 10) was used for the Izod impact strength. The test was conducted by using a test piece having a moisture content of up to 0.1 % by weight and in the surrounding atmosphere at a temperature of 23°C and humidity of 50% by weight.

(8) Evaluation of coefficient of variation of the Izod impact strength (notched)

Coefficient of variation ($CV_i$) of the impact strength was determined from the impact strength (E) and its standard deviation ($s_e$) by the following equation:

$$CV_i = s_e/E \times 100 \text{ (unit: \%)}$$

(9) Surface appearance of the molded article

The top face, the corner, the side face, and the edge of the molded article shown in FIG. 1 were visually inspected for evaluation by the following criteria. A and B are pass while C is fail.

A: excellent surface appearance with no fading or holes in the face plate.
B: no practical problem but fading found in some parts of the face plate
C: unfilled parts and holes found in the face plate with fading over the entire face plate.

(Example 1)

A preform which is a laminate of 9 sheets in total, namely, 3 sheets of carbon fiber mat 1 (CFM-1) comprising the discontinuous carbon fibers and 6 sheets of the thermoplastic resin sheet 1 (TPF-1) was placed in mold 1 for press molding at room temperature, and the mold temperature was raised to 220°C with the pressure of 0.1 MPa applied. Press molding was conducted for 5 minutes at a pressure of 5 MPa, and the mold was allowed to cool to the room temperature of 25°C while retaining the pressure to obtain a molded article. In this process, the thickness of the molded article was adjusted to 1 mm by using a spacer having a thickness of 1 mm. After observing the outer appearance of the resulting molded article, top face of the molded article was cut out to a predetermined size for evaluation. The results of the evaluation are shown in Table 1.

(Example 2)

The procedure and method of Example 1 were repeated except that the carbon fiber mat 1 (CFM-1) comprising the discontinuous carbon fibers was replaced with the carbon fiber mat 2 (CFM-2) comprising the discontinuous carbon fibers to produce a molded article. The properties are shown in Table 1.

(Example 3)

The procedure and method of Example 1 were repeated except that the carbon fiber mat 1 (CFM-1) comprising the discontinuous carbon fibers was replaced with the carbon fiber mat 3 (CFM-3) comprising the discontinuous carbon fibers to produce a molded article. The properties are shown in Table 1.

(Example 4)

The procedure and method of Example 1 were repeated except that the carbon fiber mat 1 (CFM-1) comprising the discontinuous carbon fibers was replaced with the carbon fiber mat 4 (CFM-4) comprising the discontinuous carbon fibers to produce a molded article. The properties are shown in Table 1.

(Example 5)

The procedure and method of Example 1 were repeated except that the carbon fiber mat 1 (CFM-1) comprising the discontinuous carbon fibers was replaced with the carbon fiber mat 5 (CFM-5) comprising the discontinuous carbon fibers to produce a molded article. The properties are shown in Table 1.

(Example 6)

The procedure and method of Example 1 were repeated except that the carbon fiber mat 1 (CFM-1) comprising the discontinuous carbon fibers was replaced with the carbon fiber mat 6 (CFM-6) comprising the discontinuous carbon fibers to produce a molded article. The properties are shown in Table 1.

(Example 7)

The procedure and method of Example 1 were repeated except that the carbon fiber mat 1 (CFM-1) comprising the discontinuous carbon fibers was replaced with the carbon fiber mat 7 (CFM-7) comprising the discontinuous carbon fibers to produce a molded article. The properties are shown in Table 1.

(Example 8)

A preform which is a laminate of 9 sheets in total, namely, 3 sheets of carbon fiber mat 1 (CFM-1) comprising the discontinuous carbon fibers and 6 sheets of the thermoplastic resin sheet 2 (TPF-2) was placed in the mold 1 for press molding at room temperature, and the mold temperature was raised to 250°C with the pressure of 0.1 MPa applied. Press molding was conducted for 5 minutes at a pressure of 5 MPa, and the mold was allowed to cool to the room temperature of 25°C while retaining the pressure to obtain a molded article. In this process, the thickness of the molded article was adjusted to 1 mm by using a spacer having a thickness of 1 mm. After observing the outer appearance of the resulting molded article, top face of the molded article was cut out to a predetermined size for evaluation. The results of the evaluation are shown in Table 1.

(Example 9)

3 sheets of carbon fiber-reinforced thermoplastic resin sheet 1 (CFRP-1) were separately placed in an oven equipped with a far-infrared heater, and after confirming that the temperature of the thermocouple provided on each sheet had reached 220°C, the 3 sheets were laminated in the oven to prepare preform 1.
The preheated preform 1 was then placed in the mold 1 for the press molding which had been preheated to 80°C, and the press molding was conducted at a pressure of 10 MPa for 5 minutes to obtain a molded article. In this process, the thickness of the molded article was adjusted to 1 mm by using a spacer having a thickness of 1 mm. After observing the outer appearance of the resulting molded article, top face of the molded article was cut out to a predetermined size for evaluation. The results of the evaluation are shown in Table 1.

(Example 10)

The procedure and method of Example 9 was repeated except that the carbon fiber-reinforced thermoplastic resin sheet 1 (CFRP-1) was replaced with the carbon fiber-reinforced thermoplastic resin sheet 2 (CFRP-2) to produce a molded article. The properties are shown in Table 1.

(Comparative Example 1)

The procedure and method of Example 1 were repeated except that the carbon fiber mat 1 (CFM-1) comprising the discontinuous carbon fibers was replaced with the carbon fiber mat 8 (CFM-8) comprising the discontinuous carbon fibers to produce a molded article. The properties are shown in Table 2.

(Comparative Example 2)

The procedure and method of Example 1 were repeated except that the carbon fiber mat 1 (CFM-1) comprising the discontinuous carbon fibers was replaced with the carbon fiber mat 9 (CFM-9) comprising the discontinuous carbon fibers to produce a molded article. The properties are shown in Table 2.

(Comparative Example 3)

The procedure and method of Example 1 were repeated except that the carbon fiber mat 1 (CFM-1) comprising the discontinuous carbon fibers was replaced with the carbon fiber mat 10 (CFM-10) comprising the discontinuous carbon fibers to produce a molded article. The properties are shown in Table 2.

(Comparative Example 4)

The procedure and method of Example 1 were repeated except that the carbon fiber mat 1 (CFM-1) comprising the discontinuous carbon fibers was replaced with the carbon fiber mat 11 (CFM-11) comprising the discontinuous carbon fibers to produce a molded article. The properties are shown in Table 2.

[Table 1]

| | Level | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|
| Fiber dispersion rate | Value | % | 96 | 99 | 99 | 99 | 93 | 97 | 91 | 96 | 97 | 96 |
| | Evaluation | - | A | A | A | A | B | A | B | A | A | A |
| Distribution of orientation angle | Maximum value of relative frequency | - | 0.18 | 0.18 | 0.18 | 0.18 | 0.23 | 0.18 | 0.24 | 0.18 | 0.18 | 0.18 |
| | Evaluation | - | A | A | A | A | B | A | B | A | A | A |
| | Minimum value of relative frequency | - | 0.15 | 0.15 | 0.15 | 0.15 | 0.11 | 0.15 | 0.10 | 0.15 | 0.15 | 0.15 |
| | Evaluation | - | A | A | A | A | B | A | B | A | A | A |
| Fiber length | Average fiber length Ln | mm | 4.9 | 4.7 | 4.6 | 2.6 | 7.2 | 1.8 | 14 | 4.9 | 4.6 | 4.5 |
| | CV | % | 44 | 50 | 57 | 70 | 95 | 82 | 130 | 44 | 44 | 46 |
| | Median fiber length Lc | mm | 5.9 | 5.6 | 5.6 | 2.8 | 8 | 2.6 | 18 | 5.9 | 5.6 | 5.7 |
| | Proportion in number of the fibers having the fiber length in the range of Lc ± 0.2 Lc, Pa | % | 65 | 53 | 47 | 48 | 49 | 42 | 42 | 65 | 50 | 53 |
| | Proportion in number of the fibers having the fiber length in the range of Lc ± 1mm, Pb | % | 62 | 48 | 45 | 68 | 43 | 52 | 23 | 62 | 46 | 49 |
| Compositional constitution | | 1 | (CFM-1) | (CFM-2) | (CFM-3) | (CFM-4) | (CFM-5) | (CFM-6) | (CFM-7) | (CFM-1) | (CFRP-1) | (CFRP-2) |
| | | 2 | (TPF-1) | (TPF-1) | (TPF-1) | (TPF-1) | (TPF-1) | (TPF-1) | (TPF-1) | (TPF-2) | - | - |

(continued)

| | | Level | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|---|
| Outer appearance of the molded article | | Top face | - | A | A | A | A | A | A | B | B | A | A |
| | | Corner | - | A | A | A | A | B | A | B | B | B | A |
| | | Side face | - | A | A | A | B | B | B | B | B | A | A |
| | | Edge | - | A | A | A | B | B | B | B | B | B | B |
| Mechanical properties | Top face | Flexural strength | MPa | 210 | 221 | 203 | 201 | 198 | 197 | 196 | 253 | 211 | 209 |
| | | CVb | % | 2 | 2 | 2 | 2 | 2 | 2 | 2 | 2 | 2 | 2 |
| | | Izod impact strength | J/m | 630 | 592 | 535 | 437 | 450 | 481 | 411 | 378 | 532 | 545 |
| | | CVi | % | 4 | 3 | 3 | 4 | 5 | 4 | 3 | 2 | 3 | 3 |
| | Side face | Flexural strength | MPa | 198 | 196 | 198 | 192 | 189 | 191 | 190 | 242 | 200 | 195 |
| | | CVb | % | 2 | 2 | 2 | 2 | 2 | 2 | 2 | 2 | 2 | 2 |
| | | Izod impact strength | J/m | 601 | 585 | 512 | 412 | 423 | 452 | 399 | 376 | 498 | 551 |
| | | CVi | % | 3 | 4 | 5 | 4 | 4 | 4 | 5 | 2 | 3 | 3 |
| Note | | | | | | | | | | | | | |

[Table 2]

| Level | | | Comparative Example 1 | Comparative Example 2 | Comparative Example 3 | Comparative Example 4 |
|---|---|---|---|---|---|---|
| Fiber dispersion rate | Value | % | 92 | 99 | 78 | 75 |
| | Evaluation | - | B | A | C | C |
| Distribution of orientation angle | Maximum value of relative frequency | - | 0.22 | 0.18 | 0.24 | 0.28 |
| | Evaluation | - | A | A | B | C |
| | Minimum value of relative frequency | - | 0.11 | 0.15 | 0.12 | 0.07 |
| | Evaluation | - | B | A | A | C |
| Fiber length | Average fiber length Ln | mm | 6.2 | 3.5 | 25 | 4.9 |
| | CV | % | 70 | 67 | 132 | 32 |
| | Median fiber length Lc | mm | 5.2 | 4.7 | 28 | 5.9 |
| | Proportion in number of the fibers having the fiber length in the range of Lc ± 0.2Lc, Pa | % | 15 | 30 | 9.7 | 75 |
| | Proportion in number of the fibers having the fiber length in the range of Lc ± 1 mm, Pb | % | 14 | 26 | 8.2 | 62 |
| Compositional constitution | 1 | | (CFM-8) | (CFM-9) | (CFM-10) | (CFM-11) |
| | 2 | | (TPF-1) | (TPF-1) | (TPF-1) | (TPF-1) |
| Outer appearance of the molded article | Top face | - | B | B | B | A |
| | Corner | - | C | A | C | B |
| | Side face | - | B | C | C | B |
| | Edge | - | C | C | C | B |

(continued)

| Level | | | | Comparative Example 1 | Comparative Example 2 | Comparative Example 3 | Comparative Example 4 |
|---|---|---|---|---|---|---|---|
| Mechanical properties | Top face | Flexural strength | MPa | 201 | 212 | 198 | 195 |
| | | CVb | % | 2 | 2 | 6 | 12 |
| | | Izod impact strength | J/m | 478 | 520 | 365 | 290 |
| | | CVi | % | 3 | 4 | 9 | 15 |
| | Side face | Flexural strength | MPa | 174 | 167 | 165 | 163 |
| | | CVb | % | 10 | 12 | 19 | 18 |
| | | Izod impact strength | J/m | 321 | 343 | 210 | 232 |
| | | CVi | % | 13 | 15 | 22 | 24 |
| Note | | | | | | | |

As described above, molded articles having excellent mechanical properties and molding properties could be produced in the case of Examples 1 to 9 which are within the scope of the present invention. This result has been realized by the random dispersion of the discontinuous carbon fibers constituting the carbon fiber mat of the present invention in the form of monofilaments and by adjusting various conditions so that the number average fiber length ($L_n$) and the proportion in number (Pa) of the discontinuous carbon fiber monofilaments having a fiber length in the range of median fiber length ($L_c$) $\pm$ 20% defined in the specification are within the predetermined ranges.

Furthermore, production of molded articles having even more excellent mechanical properties and shapability was enabled by using a carbon fiber mat wherein the coefficient of variation (CV) of the fiber length and the proportion in number (Pb) of the discontinuous carbon fiber monofilaments having a fiber length in the range of median fiber length ($L_c$) $\pm$ 1.0 mm are within predetermined ranges.

In the meanwhile, molded articles having excellent mechanical properties and shapability could not be produced in the Comparative Examples 1 to 4. The molded articles of the Comparative Examples 1 to 3 were inferior in the mechanical properties and the surface quality and the molded article of the Comparative Example 4 was inferior in the mechanical properties.

Industrial Applicability

The molded article produced by using the carbon fiber mat of the present invention exhibits high mechanical properties and various shaping including drawing is possible. Since the resulting molded articles having complicated shapes exhibit excellent mechanical properties, they can be used in various applications. Of such applications, they are well adapted for use in automobile and aircraft parts, electric and electronic parts, and travel bags.

Explanation of the numerals

1 box-shaped molded article
2 top face of the box-shaped molded article
3 side face of the box-shaped molded article
4 corner of the box-shaped molded article
5 edge of the box-shaped molded article
6, 7, 8, 9, 10, 11 discontinuous carbon fiber (monofilament)
12 core side mold of the mold for the press molding
13 cavity side mold of the mold for the press molding
θ two-dimensional contact angle

**Claims**

1. A carbon fiber mat wherein the discontinuous carbon fibers are dispersed in the form of monofilaments, orientation direction of the monofilaments of the discontinuous carbon fibers is random, number average fiber length ($L_n$) is at least 1.5 mm and up to 15 mm, and proportion in number (Pa) of the discontinuous carbon fiber monofilaments having a fiber length in the range of median fiber length ($L_c$) $\pm$ 20% is at least 40% and up to 99%.

2. A carbon fiber mat according to claim 1 wherein the discontinuous carbon fiber monofilaments have a coefficient of variation (CV) of the fiber length of at least 0.1% and up to 55%.

3. A carbon fiber mat according to claim 1 or 2 wherein the discontinuous carbon fiber monofilament has a number average fiber length ($L_n$) of at least 2.5 mm and up to 10 mm.

4. A carbon fiber mat according to any one of claims 1 to 3 wherein proportion in number (Pb) of the discontinuous carbon fiber monofilaments having a fiber length in the range of median fiber length ($L_c$) of the discontinuous carbon fiber monofilaments $\pm$ 1 mm is at least 50% and up to 99%.

5. A carbon fiber mat according to any one of claims 1 to 4 wherein the weight per unit area is at least 10 g/m$^2$ and up to 50 g/m$^2$.

6. A preform containing the carbon fiber mat according to any one of claims 1 to 5 and a thermoplastic resin.

7. A sheet material produced by applying heat and pressure to the preform according to claim 6.

8. A molded article produced by applying heat and pressure to the preform according to claim 6 or the sheet material according to claim 7.

FIG.1

FIG. 2

(a)

(b)

FIG. 3

FIG. 4

FIG. 5

## INTERNATIONAL SEARCH REPORT

International application No.

PCT/JP2015/083000

A. CLASSIFICATION OF SUBJECT MATTER
*D21H13/50*(2006.01)i, *B29B11/16*(2006.01)i, *B29C43/18*(2006.01)i, *B29C43/52* (2006.01)i, *C08J5/04*(2006.01)i, *D04H1/4242*(2012.01)i, *B29K101/12* (2006.01)n, *B29K105/08*(2006.01)n
According to International Patent Classification (IPC) or to both national classification and IPC

B. FIELDS SEARCHED

Minimum documentation searched (classification system followed by classification symbols)
D21H13/50, B29B11/16, B29C43/18, B29C43/52, C08J5/04, D04H1/4242, B29K101/12, B29K105/08

Documentation searched other than minimum documentation to the extent that such documents are included in the fields searched
Jitsuyo Shinan Koho          1922-1996     Jitsuyo Shinan Toroku Koho     1996-2016
Kokai Jitsuyo Shinan Koho    1971-2016     Toroku Jitsuyo Shinan Koho     1994-2016

Electronic data base consulted during the international search (name of data base and, where practicable, search terms used)
DWPI(Thomson Innovation)

C. DOCUMENTS CONSIDERED TO BE RELEVANT

| Category* | Citation of document, with indication, where appropriate, of the relevant passages | Relevant to claim No. |
|---|---|---|
| Y | JP 2010-037666 A (Toray Industries, Inc.), 18 February 2010 (18.02.2010), claims; paragraph [0001]; examples & US 2012/012263 A1 claims; paragraph [0002]; examples & WO 2010/013645 A1 & EP 2314642 A1 & CN 102056971 A & KR 10-2012-0034240 A | 1-8 |
| Y | WO 2007/097436 A1 (Toray Industries, Inc.), 30 August 2007 (30.08.2007), page 1, lines 5 to 16; page 16, lines 17 to 24; page 18, lines 3 to 9; examples & US 2009/0004453 A1 paragraphs [0001], [0061], [0062], [0067], [0096] to [0171] & WO 2007/097436 A1 & EP 1988118 A1 & CN 101421340 A & KR 10-2008-0114750 A | 1-8 |

☒  Further documents are listed in the continuation of Box C.          ☐  See patent family annex.

| | | |
|---|---|---|
| * | Special categories of cited documents: | |
| "A" | document defining the general state of the art which is not considered    to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"  later document published after the international filing date or priority date and not in conflict with the application but cited to understand the principle or theory underlying the invention

"X"  document of particular relevance; the claimed invention cannot be considered novel or cannot be considered to involve an inventive step when the document is taken alone

"Y"  document of particular relevance; the claimed invention cannot be considered to involve an inventive step when the document is combined with one or more other such documents, such combination being obvious to a person skilled in the art

"&"  document member of the same patent family

| Date of the actual completion of the international search | Date of mailing of the international search report |
|---|---|
| 05 February 2016 (05.02.16) | 16 February 2016 (16.02.16) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (January 2015)

**INTERNATIONAL SEARCH REPORT**

| International application No. |
|---|
| PCT/JP2015/083000 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2011-190549 A  (Mitsubishi Plastics, Inc.),<br>29 September 2011 (29.09.2011),<br>paragraphs [0001], [0030], [0031]; examples<br>(Family: none) | 1-8 |
| A | WO 2012/086682 A1  (Toray Industries, Inc.),<br>28 June 2012 (28.06.2012),<br>& US 2013/0192434 A1     & EP 2642007 A1<br>& CN 103119209 A          & KR 10-2013-0139857 A | 1-8 |
| A | JP 2013-163805 A  (Toray Industries, Inc.),<br>22 August 2013 (22.08.2013),<br>& US 2014/0357777 A1     & WO 2013/105340 A1<br>& EP 2803693 A1           & TW 201339217 A<br>& CN 104039873 A          & KR 10-2014-0116393 A | 1-8 |
| A | JP 2011-157637 A  (Toray Industries, Inc.),<br>18 August 2011 (18.08.2011),<br>(Family: none) | 1-8 |

Form PCT/ISA/210 (continuation of second sheet) (January 2015)